# EUROPÄISCHE PATENTSCHRIFT

(11) **EP 2 044 291 B1**
(45) Veröffentlichungstag und Bekanntmachung des Hinweises auf die Patenterteilung: **29.12.2010**
(21) Anmeldenummer: 07785628.4
(22) Anmeldetag: 13.07.2007
(51) Int. Cl.: F01D 5/00, B23P 6/00

(54) **VERFAHREN ZUR REPARATUR EINES LEITSCHAUFELSEGMENTS FÜR EIN STRAHLTRIEBWERK**
METHOD FOR REPAIRING A GUIDE BLADE SEGMENT FOR A JET ENGINE
PROCÉDÉ DE RÉPARATION D'UN SEGMENT D'AUBE DIRECTRICE D'UN MOTEUR À RÉACTION

(30) Priorität: 20.07.2006 DE 102006034055
(43) Veröffentlichungstag der Anmeldung: 08.04.2009
(73) Patentinhaber: MTU Aero Engines GmbH, 80995 München (DE)
(72) Erfinder: WULF, Joachim, 80636 München (DE)
(86) Internationale Anmeldenummer: PCT/DE2007/001254
(87) Internationale Veröffentlichungsnummer: WO 2008/009270

(56) Entgegenhaltungen:
- EP-A- 1 099 508
- EP-A- 1 422 381
- EP-A- 1 658 923
- WO-A-03/048528
- GB-A- 2 062 120
- US-A- 3 275 295
- US-A- 5 060 842
- US-A- 5 358 379
- US-A- 5 895 205

## Beschreibung

Die vorliegende Erfindung betrifft ein Verfahren zur Reparatur eines Leitschaufelsegments, wobei das Leitschaufelsegment vorzugsweise als Zwillingsleitschaufelsegment innerhalb eines Leitschaufelverbundes ausgebildet ist, welches wenigstens zwei Leitschaufeln aufweist, die zwischen einem Innendeckband und /oder einem Außendeckband angeordnet und über diese miteinander verbunden sind, wobei die Leitschaufeln ferner aus einem Nasenabschnitt und einem Hinterkantenabschnitt gebildet sind.

Das technisch Gebiet der vorliegenden Erfindung bezieht sich auf die Reparatur von Leitschaufelsegmenten, welche in Strahltriebwerken von Luftfahrzeugen eingesetzt werden. Dabei ist eine Turbine aus Turbinenstufen aufgebaut, welche in Strömungsrichtung hintereinander angeordnet sind. Pro Turbinenstufe sind stationäre Leitschaufeln angeordnet, wobei die Leitschaufeln zwischen einem Innendeckband und einem Außendeckband oder wenigstens an einem der Deckbänder aufgenommen sein können. In Abhängigkeit von der Ausführungsform der Turbine finden sogenannte Zwillingsleitschaufelsegmente Anwendung, welche je zwei Leitschaufeln umfassen, die zwischen einem entsprechenden radialen Abschnitt des Innendeckbandes und /oder des Außendeckbandes angeordnet sind und ein einzeln handhabbares Bauteil ergeben. Der Strömungskanal wird durch den radialen Zwischenraum zwischen dem Innendeckband und dem Außendeckband definiert, durch den die heißen Abgase aus der Brennkammer geleitet werden.

Aufgrund der hohen Temperaturen, die die Gase aufweise, welche die Leitschaufeln beaufschlagen, entsteht eine hohe Materialbelastung der Leitschaufelsegmente. Neben den thermischen sowie chemischen Belastungen können weiterhin mechanische Belastungen auftreten, welche durch das Eindringen von Fremdkörpern in das Strahltriebwerk entstehen, da diese mit den Leitschaufeln kollidieren und ebenfalls Oberflächenbeschädigungen hervorrufen. Um den genannten Belastungen Stand zu halten, sind die Leitschaufelsegmente beispielsweise aus hoch temperaturfesten Kobalt-Nickel-Legierungen hergestellt und häufig mit einer Oberflächenbeschichtung versehen, um einen Korrosionsschutz sowie zusätzlich einen mechanischen Schutz zu erzielen. Darüber hinaus sind zur Reduktion der thermischen Belastungen Kühlkanäle vorgesehen, welche sowohl im Nasenabschnitt als auch im Hinterkantenabschnitt der Leitschaufel eingebracht sind, welche durch einen Steg im Inneren der Leitschaufel voneinander getrennt sind.

Dennoch treten trotz der genannten Vorkchrungen zur Vertängerung der Einsatzdauer der Leitschaufelsegmente aufgrund der erheblichen Belastungen Beschädigungen an den Leitschaufeln auf, was dazu führt, dass diese in Abhängigkeit vom Grad der Beschädigung gegen neue Leitschaufeln bzw. reparierte Leitschaufeln ausgetauscht werden müssen, Aufgrund der komplexen Ausführung sowie der sehr hochwertigen und kostenintensiven Materialien der Leitschaufeln ist es häufig vorteilhaft, defekte und nicht mehr einsetzbar Leitschaufelsegmente gegen reparierte Leitschaufelsegmente auszutauschen, wobei das Ziel verfolgt wird, die Leitschaufel nicht nur im Verbund als Zwillingsleitschaufelsegmente auszutauschen, sondern einzelne Leitschaufeln aus dem Leitschaufelsegment herauszutrennen und gegen neue bzw. entsprechend reparierte Leitschaufeln zu tauschen. Dabei ist die kleinste vereinzelbare Einheit die Leitschaufeln als solche.

Ein Verfahren zur Reparatur von Leitschaufelsegmenten ist in der Patentschrift US 6,735,961 B1 offenbart. Hierin ist cin Verfahren genannt, welches hauptsächlich zur Reparatur von Leitschaufelsegmenten angewendet wird. Dabei umfassen die Leitschaufelsegmente zumindest zwei Leitschaufeln, welche zwischen einem Innendeckband sowie einem Außendeckband angeordnet sind, wobei das Verfahren den Schritt der Vereinzelung der Leitschaufeln in eine erste Leitschaufel umfasst, welche reparierbar ist sowie eine zweite Leitschaufel, welche nicht reparierbar ist, wobei die erste Leitschaufel mit einer neu angefertigten Leitschaufel verbunden wird, und den gleichen Aufbau aufweist wie die zweite Leitschaufel. Siehe hierzu auch das Dokument EP-A-1 099 508.

Die US 3,650,635 offenbart ein Verfahren zum Separieren von Leitschaufeln einer Gasturbine, bei dem ein beschädigter Nasenabschnitt vom Schaufelprofilteil entfernt und durch ein entsprechend geformtes Ersatzteil ersetzt wird. Bei dem Verfahren enthält das entfernt Segment lediglich das Nasenprofil und einen damit verbundenen Teil der Schaufelprofelhauptteilwand, was zur Folge hat, dass nicht sichergestellt ist, dass das entsprechende mit der so geschaffenen Pass- und Verbindungswandflächen verbundene Ersatzteil dauerhaft allen auftretenden Belastungen stand hält. Ferner ist nur ein vorderer Teilbereich der gesamten Leitschaufel austauschbar. Beschädigungen im übrigen Bereich der Leitschaufel sind somit nicht reparabel, was den Austausch einer gesamten Leitschaufel erfordern würde.

Aus der US 4,305,697 ist ein Verfahren bekannt, bei dem ein vorderes Randsegment entlang einer Schnittlinie von der Schaufel entfernt wird, wobei die Schnittlinie längs eines vorgewählte Weges liegt, der während des Betriebes der Schaufel relativ geringe mechanische Belastungen erfährt und durch wenigstens eine tragende Plattform verläuft, wodurch zusätzlich zu dem vorderen Randbereich ein Teil wenigstens eines tragenden Plattformteils weggeschnitten wird, der sich jedoch nicht bis zu dem vorderen Rand des Plattformteils erstreckt. Auch bei diesem Verfahren entsteht das Problem, dass nur ein bcgrcnztcr Teilbereich der gesamten Leitschaufel ausgetauscht werden kann, wobei dieser Teilbereich auf die vordere Stirnkante der Leitschaufel begrenzt ist.

Aus dem Dokument US-A-5 358 379 ist eine Leitschaufel bekannt, deren Vorderkantenbereich formschlüssig zwischen den Deckbändern gehalten ist und so leicht austauschbar ist.

Es ist daher die Aufgabe der vorliegenden Erfindung, ein verbessertes Verfahren zum partiellen Austausch mehrerer Teilbereiche einer Leitschaufel zu schaffen.

Diese Aufgabe wird durch ein Verfahren mit den Merkmalen des Anspruchs 1 gelöst, vorteilhafte Ausführungsformen und Weiterbildungen der Erfindung sind in den abhängigen Ansprüchen angegeben.

Das erfindungsgemäße Verfahren weist die Schritte der Identifikation einer nicht reparablen Leitschaufel innerhalb eines Leitschaufelsegments, welches aus dem Leitschaufelverbund herauszutrennen ist, und das Separieren wenigstens einer nicht reparablen Leitschaufel von wenigstens einer reparablen Leitschaufel auf. Erfindungsgemäß erfolgen dann das Durchtrennen der separierten Leitschaufel in einer zweiten Trennebene zwischen dem Nasenabschnitt und dem Hinterkantcnabschnitt, das Instandsetzen des reparablen Nasen- oder Hinterkantenabschnittes, das Fügen eines instandgesetzten oder neuen Nasenabschnittes mit einem instandgesetzten oder neuen Hinterkantabschnitt zu wenigstens einer Leitschaufel und das Fügen von zwei Leitschaufeln zu einem Lcitschaufelsegment,

Durch dieses Verfahren wird die Möglichkeit geschaffen, die kleinste austauschbare Einheit nicht nur auf die Leitschaufel oder vorgefertigte Teilbereiche derselben zu begrenzen, sondern ferner die Leitschaufel als solche weiter zu teilen und den wahlweisen Austausch sowohl eines Nasenabschnittes als auch eines Hinterkantenabschnittes zu ermöglichen. Dabei wird zunächst eine Leitschaufel identifiziert, welche reparaturbedürftig ist, Der Reparaturvorgang kann dabei das Reparieren von Ausbrüchen in der Oberfläche der Leitschaufel und damit die Wiederherstellung der geforderten Profiloberfläche umfassen. Weiterhin kann die Reparatur ein Auftragsschweißen oder ein ähnliches Verfahren umfassen, um die erforderliche Kontur wieder herzustellen. Ferner kann ein thermisches Verfahren Anwendung finden, mittels dessen die Eigenspannungen aus den Leitschaufelsegmenten gelöst werden, wobei die Anwendung des thermischen Verfahrens vorteilhafterweise vor dem Trennen der einzelnen Leitschaufeln aus dem Leitschaufelsegment angewendet wird. Die Wiederholbarkeit der Reparaturen ist begrenzt durch auftretende lokale Verformungen der Leitschaufeln sowie ein Unterschreiten einer minimalen Wandstärke, welche aufgrund wiederholter chemischer Ablöseprozesse für jeden Rcparaturvorgang verringert wird. Das bedeutet, dass die Leitschaufeln einen Beschädigungsgrad erreichen können, bei dem eine wiederholte Reparatur nicht mehr zulässig ist. In diesem Fall wird die Leitschaufel bzw. der Nasenabschnitt oder der Hinterkantenabsehnitt gegen ein Neuteil ausgetauscht.

In Abhängigkeit von der Ausfürhrungsform des Leitsehaufelsegmentes besteht die Möglichkeit, dass die Leitschaufeln einteilig, d.h, materialeinheitlich, mit dem Außendeckband und /oder dem Innendeckband verbunden sind. Gemäß anderer Ausführungsformen besteht jedoch auch die Möglichkeit, dass die Leitschaufeln zwischen dem Innendeckband und /oder dem Außendeckband mittels formschlüssiger Verbindungen verbunden werden, welche lösbar ist. Daher kann im ersten Fall das Trennen der reparablen Leitschaufel von der nicht reparablen Leitschaufel in einer ersten Trennebene erfolgen, welche im Innendeckband bzw. im Außendeckband zwischen den Leitschaufeln angeordnet, ist. Sind jedoch die Leitschaufeln mittels einer lösbare mechanischen Vebindung an den Deckbändern angeordnet, besteht die Möglichkeit, das Trennen bzw. das Separieren der reparablen Leitschaufel von der nicht reparablen Leitschaufel mittels Lösen dar lösbaren Verbindung zwischen den Leitschaufeln und den Deckbändern vorzunchmen. Gemäß eines weiteren Ausführungsbeispiels der vorliegenden Erfindung ist vorgesehen, dass die Leitschaufeln wenigstens einen Steg zwischen dem Nasenabschnitt und dem Hinterkantenabschnitt aufweise und die zweite Trennebene in den Steg gelegt wird. Dabei kann die Durchtrennung der Leitschaufel in der zweiten Brennebene mittels eines Trennverfahrens aus der Gruppe der Erosionsverfahren, umfassend ein Drahterosionsverfahren, durchgeführt werden.

Der Steg, welcher innenseitig in der Leitschaufel angeordnet ist, trennt einen vorderen Kühlkanal von einem hinteren Kühlkanal. Damit ist der separierte Bereich, welcher den vorderen Kühlkanal umfasst, als Nasenabschnitt definiert, wobei ferner der Bereich des hinteren Kühlkanals als Hinterkantenabschnitt definiert wird. Wird das Trennverfahren mittels eines Drahterosionsverfahrens durchgerührt, so sind sehr hohe Genauigkeiten erzielbar, wobei ferner auch der dünn Steg durchtrennt werden kann, so dass eine homogene Trennfläche entsteht, welche beim späteren Fügen bzw. beim Aufeinanderbringen des Nasenabschnittes mit dem Hinterkantenabschnitt Vorteile bietet. Bei anderen Ausführungsformen des Querschnitts einer Leitschaufel, beispielsweise mit mehreren Stegen, können auch mehrere Trennebenen vorgesehen sein, so dass die Leitschaufel nicht nur in zwei Teile vereinzelt werden kann.

Gemäß einer weiteren Ausführungsform der vorliegenden Erfindung ist vorgesehen, dass zur Wiederherstellung der Leitschaufel zwischen dem Nasenabschnitt und dem Hinterkantenabschnitt nach der Instandsetzung ein Verfahren aus der Gruppe der Fügeverfahren, umfassend ein Schweißverfahren oder ein Lötverfahren, angewendet wird. Das Schweißverfahren kann dabei als Feuerschweißen, Gasschmelzschweißen, Lichtbogenhandschweißen, Schutzgasschweißen, Wiederstandsschweißen, Kaltpressschweißen, Reibschweißen, Unterpulverschweißen, Laserstrahlschweißen, Elektronenstrahlschweißen oder einem sonstigen möglichen Schweißverfahren ausgeführt sein.

Gemäß eines weiteren Ausführungsbeispiels der vorliegenden Erfindung ist vorgesehen, dass zur Wiederherstellung der Leitschaufel sowohl der Nasenabschnitt als auch der Hinterkantenabschnitt nach der Instandsetzung innerhalb des Innendeckbandes und /oder des Außendeckbandes formschlüssig und/oder stoffschlüssig angeordnet und in diesen montiert werden. Dabei ist zu beachten, dass es verschiedene Ausführungsformen von Leitschaufeln gibt, die auf unterschiedliche Weise an den Deckbändern befestigt worden. Bekannt sind nämlich auch Ausführungen, bei denen die Leitschaufeln innerhalb der Deckbänder geklemmt oder verkeilt werden. Derartige Verbindungstechniken machen ein Trennen der Leitschaufeln in einer ersten Trennebene innerhalb der Deckbänder überflüssig, so dass diese auch nach Instandsetzung in zweiteiliger Form wieder zwischen die Deckbänder eingesetzt werden können. Ist die Leitschaufel in der zweiten Trennebene durchtrennt worden, und entweder der Nasenabschnitt oder der Hinterkantenabschnitt ausgetauscht worden, so kann die Leitschaufel in zweiteiliger Form wieder zwischen den Deckbändern angeordnet werden, wobei die Klemmung der jeweiligen Nasen- und Hinterkantenabschnitte zwischen den Deckbändern einzeln erfolgt, Dennoch ergibt sich eine vollständige Leitschaufel, bei der ein Fügeverfahren zum Aneinanderfügen der Nasen- und Hinterabsehnitte an sich überflüssig ist.

Weitere, die Erfindung verbessernde Maßnahmen sind in den Unteransprüchen angegeben oder werden nachfolgend gemeinsam mit der Beschreibung eines bevorzugten Ausführungsbeispiels der Erfindung anhand der Figuren näher dargestellt. Es zeigen:
- Fig. 1: eine perspektivische Ansicht eines Zwillingsleitschaufelsegments, wobei die Nasenabschnitt sowie jeweils einen reparablen und einen nicht reparablen Nasenabschnitt sowie einen Hinterkantenabschnitt aufweisen;
- Fig. 2: eine Querschnittansicht zweiter Leitschaufeln, wobei die erste und zweite Trennebene angedeutet sind; und
- Fig. 3: ein mit einer beispielhaften Reihenfolge gewähltes Ablaufdiagramm des Verfahrens gemäß der vorliegenden Erfindung.

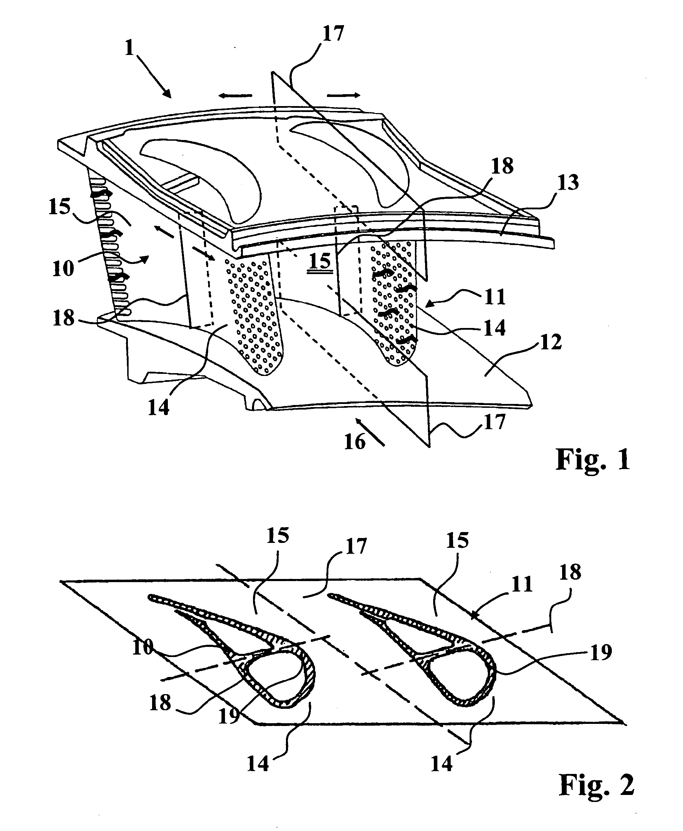

In Fig. 1 ist ein Leilschaufelsegment 1 dargestellt, welches als Zwillingsleitschaufelsegment ausgeführt ist. Ein Zwillingsleitschaufelsegment umfasst zwei Leitschaufeln 10 und 11, welche beabstandet zueinander angeordnet sind, und wobei zwischen den Leitschaufeln 10, 11 ein Strömungsquerschnitt ausgebildet ist. Der Strömungsquerschnitt wird aus einer Strömungsrichtung 16 mit dem entsprechenden Arbeitsgas angeströmt, wobei das Leitschaufelsegment einen Stator bildet, welcher ortsfest und nicht rotierend im Körper des Strahltriebwerks eingebaut ist. Die Leitschaufel 10 ist als reparable Leitschaufel bezeichnet, wobei diese einen unbeschädigten Nasenabschnitt 14 und einen beschädigte Hinterkantenabschnitt 15 aufweist, wobei die Leitschaufel 11 als nicht reparable Leitschaufel bezeichnet ist, und einen nicht reparablen Nasenabschnitt umfasst, Die Darstellung der jeweils nicht reparablen Bereiche ist ausschließlich beispielhaft zu verstehen. Ferner ist die Bezeichnung der reparablen sowie der nicht reparablen Leitschaufel lediglich zur Schaffung einer Untcrscheidungsk-raft als solche bezeichnet. Die Leitschaufeln 10, 11 sind zwischen einem Innendeckband 12 sowie einem Außendeckband 13 angeordnet, wobei eine Turbinenstufe aus einer Vielzahl von auf einem Umfang angeordneten Leitschaufelsegmenten 1 aufgebaut ist. Der gesamte Leitschaufelverbund lässt sich gemäß des vorliegenden Ausführungsbeispiels in mehrere Zwillingsleitschaufeln 1 trennen, so dass auch eine jeweilige Reparatur der Leitschaufelsegmente 1 einzeln erfolgen kann.

Zur Trennung der Leitschaufel 10 von der Leitschaufel 11 wird gemäß des vorliegenden Verfahrens zunächst eine Durchtrennung des Innendeckbandes 12 sowie des Außendeckbandes 13 in einer ersten Trennebene 17 vorgenommen. Die Trennung der Leitschaufeln im Bereich der Deckbänder kann mittels eines Drahterosionsverfahrens vorgenommen werden, welches aufgrund der eingesetzten Materialien als besonders vorteilhaft betrachtet werden muss, wobei auch mechanische Sägeverfahren Anwendung finden können. Wenn die Leitschaufeln 10 und 11 in der Trennebene 17 voneinander getrennt sind, kann identifiziert werden, welche Bereiche der Leitschaufel 10, 11 ausgetauscht werden müssen. Dabei können die Leitschaufeln 10, 11 in einen Nasenabschnitt 14 und in einen Hinterkantenabschnitt 15 jeweils unterteilt werden. Die Teilebene bzw. die Trennebene innerhalb der Leitschaufel 10, 11 ist als die zweite Trennebene 18 angegeben, welche beispielhaft in einer Linienkontur dargestellt ist. Sind die Leitschaufeln 10, 11 materialeinheitlich, d.h. einteilig mit den Deckbändern 12, 13 verbunden, so sind die Konturen der angedeuteten zweiten Trennebene 18 derart zu verstehen, dass sich diese auch durch die Deckbänder erstrecken. Nach der Trennung der Leitschaufeln 10, 11 in der ersten Trennebene 17 erfolgt die Vereinzelung des Nasenabschnittes 14 vom Hinterkantenabschnitt 15 in der zweiten Trennebene 18. Nach der Reparatur der jeweiligen Abschnitte 14, 15 erfolgt ein Zusammensetzen der reparierten bzw. neuen Abschnitte der Nase oder Hinterkante, und ein anschließendes Fügen bzw. entsprechendes Anordnen der jeweiligen Abschnitte 14, 15 zwischen den Deckbändern 12, 13 kann vorgenommen werden.

Fig. 2 zeigt beispielhaft einen Querschnitt eines Leitschaufelsegments, wobei im Querschnitt zunächst die erste Trennebene 17 sowie die zweite Trennebene 18 mit gestrichelten Linien angedeutet sind. Die erste Trennebene 17 befindet sich zwischen den Leitschaufeln 10, 11, wobei die zweite Trennebene 18 einen Nasenabschnitt 14 von einem Hinterkantenabschnitt 15 der Leitschaufel 10 und 11 trennt. Die zweite Trennebene 18 liegt in einem Steg 19, welcher sich im wesentlichen quer zur Strömungsrichtung zwischen der linken Seitenfläche und der rechten Seitenfläche der Leitschaufel 10, 11 erstreckt. Erfolgt nun die Trennung in der zweiten Trennebene 18 mittels eines Trennverfahrens, so entsteht eine homogene Planfläche als Teilungsebene.

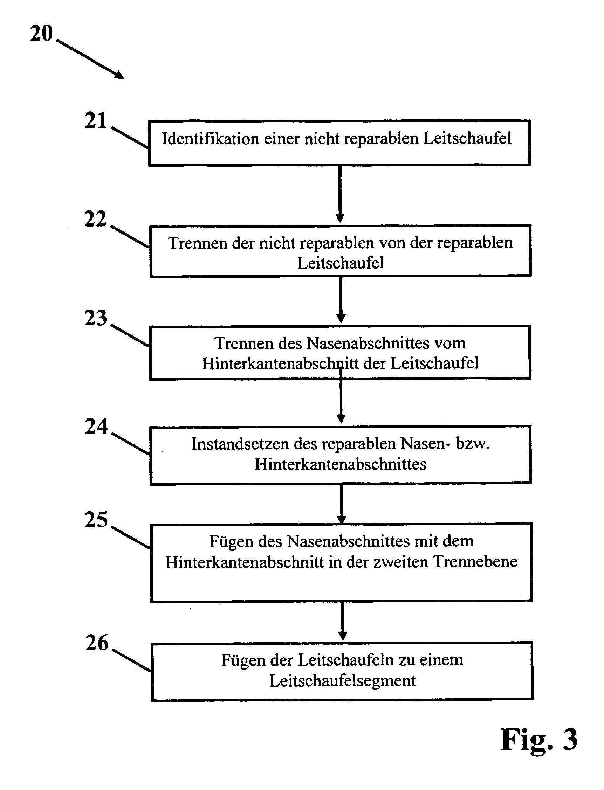

Fig. 3 zeigt das Verfahren in einem Ablaufdiagramm 20, wobei die Darstellung auf sechs Verfahrensschritte begrenzt ist und im Hinblick auf den Schutzumfang der vorliegenden Erfindung nicht als Einschränkung zu verstehen ist. Vielmehr können weitere Verfahrensschritte hinzugefügt werden oder es können genannte Verfahrensschritte entfallen.

Im ersten Verfahrensschritt 21 wird zunächst eine nicht reparable Leitschaufel identifiziert, wobei die Identifikation hauptsächlich am Grad der Beschädigung der Leitschaufel erfolgt. Die Identifikation umfasst weiterhin die Lokalisierung der Beschädigungen im Bereich des Nasenabschnittes sowie des Hinterkantenabschnittes. Darauf folgt ein zweiter Verfahrensschritt 22, welcher das Trennen der nicht reparablen von der reparablen Leitschaufel umfasst. Dieses Trennen kann beispielsweise mittels eines Drahterosionsverfahrens erfolgen, wobei andere Trennverfahren, wie z.B. ein mechanisches Trennen mittels eines Sägeschnittes, möglich ist. Das gleiche Verfahren zur Trennung des Nasenabschnittes vom Hinterkantenabschnitt der Leitschaufel ist im Verfahrensschritt 23 genannt. Nunmehr sind sowohl die Leitschaufeln voneinander separiert, als auch der Nasenabschnitt vom Hinterkantenabschnitt voneinander getrennt worden. Darauf folgt im Verfahrensschritt 24 ein Instandsetzen des reparablen Nasen- bzw. Hinterkantenabschnittes. Dabei kann auch vorgesehen sein, nicht reparable Nasen- und Hinterkantenabschnitte durch Neuteile zu ersetzen. Die Neuteile betreffen dabei entweder nur die jeweiligen Abschnitte, wobei zu überlegen ist, dass beim Einsatz eines Neuteils die Vereinzelung eines jeweiligen Abschnittes zum gezielten Einsatz und zur Verbindung mit einem reparierten Abschnitt nicht zielführend ist, da eine neue Leitschaufel besser als Ganzes eingesetzt wird. Im Verfahrensschritt 25 folgt das Fügen des Nasenabschnittes mit dem Hinterkantenabschnitt in der zweiten Trennebene, wobei abschließend im Verfahrensschritt 26 das Fügen der Leitschaufeln zu einem Leitschaufelsegment folgt.

Die Erfindung beschränkt sich in ihrer Ausführung nicht auf das vorstehend angegebene, bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Reparatur eines Leitsehaufelsegments (1), wobei das Leitsehaufelsegment (1) innerhalb eines Leitschaufelverbundes ausgebindet ist, welches wenigstens zwei Leitschaufeln (10, 11) aufweist, die an einem Innendeckband (12) und /oder einem Außendeckband (13) angeordnet und über diese/dieses miteinander verbunden sind, wobei die Leitschaufeln (10, 11) ferner aus einem Nasenabschnitt (14) und einem Hinterkantenabschnitt (15) gebildet sind, mit folgenden Schritten:
- Identifikation einer nicht reparablen Leitschaufel (11) innerhalb eines Leitschaufelsegments (1) welche aus dem Leitschaufelsegment herauszutrennen ist;
- Separieren der nicht reparablen Leitschaufel (11) von wenigstens einer reparablen Leitschaufel (10) in einer ersten Trennebene (17);
**gekennzeichnet durch** die folgenden, weiteren Schritte:
- Durchtrennen der separierten Leitschaufel (11) in einer zweiten Trennebene (18) zwischen dem Nasenabschnitt (14) und dem Hinterkantenabschnitt (15);
- Instandsetzung des reparablen Nasen- oder Hinterkantenabschnittes (14, 15);
- Fügen eines instandgesetzten oder neuen Nasenabschnittes (14) mit einem instandgesetzten oder neuen Hinterkantenabschnitt (15) zu wenigstens einer Leitschaufel (11); und
- Fügen von wenigstens zwei Leitschaufeln (10, 11) zu einem Leitschaufelsegmennt (1).

2. Verfahren nach Anspruch 1, **dadurch gekennzeichnet, dass** die Leitschaufeln (10, 11) wenigstens einen Steg (19) zwischen dem Nasenabschnitt (14) und dem Hintcrkantcnabschnitt (15) aufweisen und die zweite Brennebene (18) in den Steg (19) gelegt wird.

3. Verfahren nach Anspruch 1 oder 2, **dadurch gekennzeichnet, dass** die Durchtrennung der Leitschaufel (11) in der zweiten Trennebene; (18) mittels eines Trennverfahrens aus der Gruppe der Erosionsverfahren, umfassen ein Drahterosionsverfahren durchgeführt wird.

4. Verfahren nach einem der vorgenannten Ansprüche, **dadurch gekennzeichnet, dass** das Trennen der reparablen Leitschaufel (10) von der nicht reparablen Leitschaufel (11) in einer ersten Trennebene (17) erfolgt, welche im Innendeckband (12) und /oder im Außendeckband (13) zwischen den Leitschaufeln (10, 11) angeordnet ist.

5. Verfahren nach einem der Ansprüche 1 bis 3, **dadurch gekennzeichnet, dass** die Leitschaufeln (10, 11) mittels einer lösbaren Verbindung am Innendeckband (12) und /oder am Außendeckband (13) angeordnet sind und das Trennen der reparablen Leitschaufel (10) von der nicht reparablen Leitschaufel (11) mittels Lösen der lösbaren Verbindung zwischen den Leitschaufeln (10, 11) und den Deckbändern (12, 13) erfolgt.

6. Verfahren nach einem der vorgenannten Ansprüche, **dadurch gekennzeichnet, dass** die Instandsetzung der wenigstens einen reparablen Leitschaufel (10) eine Reparatur der Profiloberflächen umfasst, und insbesondere Oberflächenfchlstellen ausgebessert werden und eine Wärmebehandlung vorgenommen wird.

7. Verfahren nach einem der vorgenannten Ansprüche, **dadurch gekennzeichnet, dass** zur Wiederherstellung der Leitschaufel (11) zwischen den Nasenabschnitt (14) und dem Hinterkantenabschnitt (15) nach der Instandsetzung ein Verfahren aus der Gruppe der Fügeverfahren, umfassend ein Schweißverfahren oder ein Lötverfahren angewendet wird.

8. Verfahren nach einem der Ansprüche 1 bis 6, **dadurch gekennzeichnet, dass** zur Wiederherstellung der Leitschaufel (11) sowohl der Nasenabschnitt (14) als auch der Hinterkantenabschnitt (15) nach der Instandsetzung innerhalb des Innendeckbandes (12) und /oder des Außendeckbandes (13) formschlüssig und /oder stoffschlüssig angeordnet und in diesen montiert werden.

## Claims

1. Method for repairing a guide blade segment (1), wherein the guide blade segment (1) is formed within a guide blade composite which has at least two guide blades (10, 11) that are arranged on an inner covering strip (12) and/or an outer covering strip (13) and are interconnected by way of these strips/strip, wherein the guide blades (10, 11) are formed, furthermore, from a nose section (14) and a rear-edge section (15), having the following steps:
- identification of a non-repairable guide blade (11) within a guide blade segment (1) that is to be separated out from the guide blade segment;
- separation of the non-repairable guide blade (11) from at least one repairable guide blade (10) in a first separating plane (17);
**characterised by** the following further steps:
- splitting of the separated guide blade (11) in a second separating plane (18) between the nose section (14) and the rear-edge section (15);
- overhaul of the repairable nose or rear-edge section (14, 15);
- joining of an overhauled or new nose section (14) with an overhauled or new rear-edge section (15) to form at least one guide blade (11); and
- joining of at least two guide blades (10, 11) to form a guide blade segment (1).

2. Method according to claim 1, **characterised in that** the guide blades (10, 11) have at least one web (19) between the nose section (14) and the rear-edge section (15), and the second separating plane (18) is located in the web (19).

3. Method according to claim 1 or 2, **characterised in that** the splitting of the guide blade (11) is carried out in the second separating plane (18) by means of a separating method from the group of erosion methods that includes a wire-erosion method.

4. Method according to one of the afore-mentioned claims, **characterised in that** the separation of the repairable guide blade (10) from the non-repairable guide blade (11) is effected in a first separating plane (17) which is arranged in the inner covering strip (12) and/or in the outer covering strip (13) between the guide blades (10, 11).

5. Method according to one of claims 1 to 3, **characterised in that** the guide blades (10, 11) are arranged on the inner covering strip (12) and/or on the outer covering strip (13) by means of a releasable connection, and the separation of the repairable guide blade (10) from the non-repairable guide blade (11) is effected by means of release of the releasable connection between the guide blades (10, 11) and the covering strips (12, 13).

6. Method according to one of the afore-mentioned claims, **characterised in that** the overhaul of the at least one repairable guide blade (10) includes a repair of the profiled surfaces, and in particular surface defects are rectified and heat treatment is carried out.

7. Method according to one of the afore-mentioned claims, **characterised in that** in order to reproduce the guide blade (11) between the nose section (14) and the rear-edge section (15) after the overhaul a method from the group of joining methods, including a welding method or a soldering method, is applied.

8. Method according to one of claims 1 to 6, **characterised in that** in order to reproduce the guide blade (11) after the overhaul both the nose section (14) and the rear-edge section (15) are arranged within the inner covering strip (12) and/or the outer covering strip (13) in a form-locking manner and/or material-locking manner and are assembled in the latter.

## Revendications

1. Procédé de réparation d'un segment d'aube directrice (1), où le segment d'aube directrice (1) est réalisé à l'intérieur d'un ensemble d'aubes directrices comportant au moins deux aubes directrices (10, 11) disposées entre une bande de couverture intérieure (12) et/ou une bande de couverture extérieure (13) et reliées l'une à l'autre par lesdites bandes, les aubes directrices (10, 11) étant en outre formées d'une partie de bord d'attaque (14) et d'une partie de bord arrière (15), avec les étapes suivantes :
✔ identification d'une aube directrice (11) non réparable à l'intérieur d'un segment d'aube directrice (1), laquelle doit être séparée du segment d'aube directrice ;
✔ séparation de l'aube directrice non réparable (11) d'au moins une aube directrice réparable (10) sur un premier plan de séparation (17) ;
**caractérisé par** les autres étapes suivante
✔ sectionnement de l'aube directrice séparée (11) sur un deuxième plan de séparation (18) entre la partie de bord d'attaque (14) et la partie de bord arrière (15) ;
✔ réparation de la partie de bord d'attaque ou de la partie de bord arrière réparable (14, 15) ;
✔ assemblage d'une partie de bord d'attaque (14), réparée ou neuve, avec une partie de bord arrière (15), réparée ou neuve, pour former au moins une aube directrice (11) ; et
✔ assemblage d'au moins deux aubes directrices (10, 11) pour former un segment d'aube diretrice (1).

2. Procédé selon la revendication 1, **caractérisé en ce que** les aubes directrices (10, 11) comportent au moins une paroi (19) entre la partie de bord d'attaque (14) et la partie de bord arrière (15), et **en ce que** le deuxième plan de séparation (18) passe par la paroi (19).

3. Procédé selon la revendication 1 ou la revendication 2, **caractérisé en ce que** le sectionnement de l'aube directrice (11) sur le deuxième plan de séparation (18) est effectué au moyen d'un procédé de sectionnement du groupe des procédés d'érosion, comprenant un procédé d'électroérosion par fil.

4. Procédé selon l'une des revendications précédentes, **caractérisé en ce que** le sectionnement de l'aube directrice réparable (10) de l'aube directrice non réparable (11) est effectué sur un premier plan de séparation (17) disposé entre les aubes directrices (10, 11) sur la bande de couverture intérieure (12) et/ou la bande de couverture extérieure (13).

5. Procédé selon l'une des revendications 1 à 3, **caractérisé en ce que** les aubes directrices (10, 11) sont disposées au moyen d'une connexion amovible sur la bande de couverture intérieure (12) et/ou sur la bande de couverture extérieure (13), et en **en ce que** le sectionnement de l'aube directrice réparable (10) de l'aube directrice non réparable (11) est effectué par desserrage de la liaison amovible entre les aubes directrices (10, 11) et les bandes de couverture (12, 13).

6. Procédé selon l'une des revendications précédentes, **caractérisé en ce que** la réparation de l'aube directrice ou des aubes directrices (10) comprend une réparation des surfaces du profil, et **en ce qu'**il est procédé en particulier à une retouche des défauts de surface et à un traitement thermique.

7. Procédé selon l'une des revendications précédentes, **caractérisé en ce que**, pour la remise en place de l'aube directrice (11) entre la partie de bord d'attaque (14) et la partie de bord arrière (15) après réparation, il est recouru à un procédé du groupe des procédés d'assemblage, comprenant un procédé de soudage ou un procédé de brasage.

8. Procédé selon l'une des revendications 1 à 6, **caractérisé en ce que**, pour la remise en place de l'aube directrice (11), la partie de bord d'attaque (14) ainsi que la partie de bord arrière (15) sont après réparation disposées par accouplement mécanique et/ou par soudage à l'intérieur de la bande de couverture intérieure (12) et/ou de la bande de couverture extérieure (13) et montées dans celles-ci.
